# EUROPÄISCHE PATENTANMELDUNG

(11) **EP 0 539 871 A2**
(43) Veröffentlichungstag der Anmeldung: **05.05.1993**
(21) Anmeldenummer: 92118131.9
(22) Anmeldetag: 23.10.1992
(51) Int. Cl.: B65G 53/46

(54) **Zellenradschleuse**

(30) Priorität: 29.10.1991 DE 4135593
(71) Anmelder: ZEPPELIN SCHÜTTGUTTECHNIK GmbH, D-88250 Weingarten (DE)
(72) Erfinder: Kolitschus, Hans, Dipl.-Ing., W-7981 Blitzenreute (DE); Bercx, Helmut, Dipl.-Ing., W-7962 Wolfegg (DE)
(74) Vertreter: Patentanwälte Eisele, Otten & Roth

(57) **Zusammenfassung**

Es wird eine Zellenradschleuse vorgeschlagen, die zum Dosieren von Schüttgut oder dergleichen dient. Um eine problemlose Zuführung von Schüttgut in die Kammern (6) eines Zellenrades (3) auch bei aufsteigender Leckluft zu ermöglichen, ist oberhalb des Zellenrades (3) ein Freiraum (14) vorgesehen, der den Schüttgutstrom umgibt und dadurch einen vom abwärtsgerichteten Schüttgutstrom getrennten Raum bildet, um die aus den aufsteigenden Zellenradkammern und allseitig um das Zellenrad hochströmende Leckluft ungehindert abzuführen.

## Beschreibung

Die Erfindung betrifft eine Zellenradschleuse nach dem Oberbegriff des Anspruchs 1.

### Stand der Technik:

Schüttgüter können bisher mit Hilfe allgemein bekannter Zellenradschleusen aus einem Silo in einen Raum gleichhohen, höheren oder niedrigeren Druckes bis zu einem Differenzdruck von ca. 3,5 bar dosiert ausgetragen werden. Die Zellenradschleuse besteht aus einem zylindrischen Gehäuse mit einem sich darin drehenden Zellenrad mit horizontaler Längsachse und mit daran befestigten radialen Zellenradstegen zur Bildung von Zellenradkammern für das Schüttgut (z. B. DE OS 23 63 505). Das z. B. aus einem über der Zellenradschleuse angeordneten Silo zu fördernde Schüttgut wird über einen oberen Schüttgutzulauf in die Kammern des Zellenrades gefüllt und nach einer Drehung um ca. 180° an der Unterseite über einen Schüttgutauslauf ausgetragen. Dabei unterscheidet man zwischen Austrags- und Druchblasschleusen, die das Schüttgut im unteren Bereich des Zellenrades austragen bzw. bei denen die Zellenradkammern quer zur Laufrichtung durch einen Luftstrom entleert werden.

Unterhalb des Schüttgutauslaufes der Zellenradschleuse ist eine Förderleitung zum Abtransport des Schüttguts vorgesehen. Diese Förderleitung steht meist unter einem erhöhten Druck, während am Schüttguteintritt der Zellenradschleuse im allgemeinen der Atmosphärendruck vorherrscht. Aufgrund dieser Druckdifferenz kann eine nicht unbeachtliche Leckluftmenge vom Schüttgutauslauf mit höherem Druckniveau zum Schüttguteinlauf mit niedrigerem Druckniveau gelangen, wobei im wesentlichen die engen Spalte zwischen dem sich drehenden Zellenrad und dem Zellenradgehäuse die Leckluftmenge bestimmen.

Weiterhin füllen sich die im Schüttgutauslauf entleerenden Zellenradkammern mit Druckluft, wodurch aufgrund der Drehbewegung des Zellenrades zum oberen Schüttguteinlauf ebenfalls Druckluft in den Schüttgutzulauf gefördert wird. Sowohl durch den durch Spalte aufsteigenden Leckluftstrom als auch durch die nach oben geförderte Druckluftmenge in den Kammern wird der Schüttgutzulauf in die einzelnen Zellenradkammern stark behindert. Dies kann im Extremfall zu einem stark verminderten Füllgrad und damit auch verminderter Förderleistung der Zellenradschleuse führen.

Um diesen Nachteil zu vermeiden, sind Zellenradschleusen bekanntgeworden, die seitlich eine oder mehrere obere Entlüftungsbohrungen oder einen Entlüftungsschlitz im Zellenradgehäuse aufweisen. Die Wirkungsweise dieser Leckluftabführleitungen ist jedoch für sich allein gesehen noch nicht befriedigend.

Der Erfindung liegt die Aufgabe zugrunde, die genannten Nachteile zu beseitigen und insbesondere eine Zellenradschleuse der gattungsgemäßen Art zu schaffen, bei welcher trotz letztlich nicht mehr zu vermeidender Leckluft ein hoher Wirkungsgrad in der Förderleistung erzielt wird. Insbesondere soll ein hoher Füllgrad der Zellenradkammern mit geringen Leckluftverlusten erzielt werden. Gleichermaßen soll die Zellenradschleuse produktschonend und auch bei Granulatförderung möglichst geräuscharm hackfrei arbeiten.

Diese Aufgabe wird ausgehend von einer Zellenradschleuse nach der Gattung des Anspruchs 1 durch die kennzeichnenden Merkmale gelöst. In den Unteransprüchen sind besonders vorteilhafte und zweckmäßige Weiterbildungen der Erfindung in erfinderischer Ausgestaltung vorgesehen.

### Vorteile der Erfindung:

Die erfindungsgemäße Zellenradschleuse hat gegenüber den bekannten Einrichtungen den Vorteil, daß im oberen Bereich des Zellenradgehäuses ein zusätzlicher Freiraum zur gezielten Abführung für die aufsteigende Leckluft gebildet wird. Die komprimierte Leckluft kann seitlich des oberen Schüttgutzulaufes im darum angeordneten Freiraum über einen zusätzlichen Leckluftstutzen aus der Zellenradschleuse abgeführt werden, ohne den Schüttgutstrom in die Zellenradkammer zu behindern, denn aufgrund des durch ausreichenden Freiraum gesicherten und getrennten Leckluftabzuges ist es für das in die Zellenradschleuse einzutragende Schüttgut möglich, die Zellenradkammern nahezu ganz zu füllen. Dies geschieht ohne daß ein nach oben gerichteter, schädlicher Leckluftstrom den Schüttgutzulauf nach unten behindert.

Eine optimale Durchgangsleistung erreicht eine Zellenradschleuse dann, wenn die Schüttgutkammern jeweils vollständig mit Schüttgut gefüllt sind, was einem Füllgrad von 100 % entspricht. Insbesondere beim Austragen gut fließender Produkte wie Granulat, füllen sich die Zellenradkammern vollständig und sehr schnell bei einer guten Leckluftabführung. Eine überfüllte Kammer im Einlaufbereich der Schleuse führt jedoch beim Eintritt der Zellenradstege in die Bohrung des Zellenradgehäuses zu einem unangenehmen hacken, was durch das Einklemmen und Abscheren von Granulatkörnern zwischen Zellenradsteg und Eintrittskante in die Zellenradbohrung des Zellenradgehäuses bewirkt wird. Erfindungsgemäß ist es deshalb weiterhin vorgesehen, daß der Schüttgutstrom durch den Schüttgutzulauf mit Hilfe eines zusätzlichen Einlauftrichters dem sich drehenden Zellenrad bei gut fließenden Produkten insbesonder bei Granulat, bereits vordosiert zugeführt wird. Vor dem Eintritt der Zellenradkammern in den seitlich abgedichteten Bereich des Zellenradgehäuses wird die Einlaufkante zum Gehäuse im Ein- und Auslauf als eine oder mehrere Schrägen ausgebildet. So kommt es nicht zu einer Linienberührung, sondern lediglich zu einer Punktberührung zwischen einem in die Gehäusebohrung eintretenden Zellenradsteg und der Eintrittsfläche in das Zellenradgehäuse. Ein Abscheren und damit Zerhacken von Granulatkörnern an einer Gehäuseeintrittskante unterbleibt deshalb. Dieser Vorgang ist grundsätzlich in der EP 0 212 256 B1 der Anmelderin für eine Horizontalschleuse gezeigt. Zur Erläuterung der Wirkungsweise des Abstreifens des Schüttguts wird hiermit auf diese Druckschrift ausdrücklich verwiesen.

Weitere Einzelheiten und Vorteile der Erfindung sind in den Zeichnungen dargestellt und in der nachfolgenden Beschreibung näher erläutert. Es zeigen
- Fig. 1: einen Längsschnitt durch eine erfindungsgemäße Zellenradschleuse,
- Fig. 2: eine Ansicht des Inneren des Zellenradgehäuses aus Richtung des Pfeiles A in Fig. 1 und
- Fig. 3: einen Schnitt durch das Zellenradgehäuse entlang der Schnittlinie B-B in Fig. 1,
- Fig. 4: eine Ansicht des Inneren des Zellenradgehäuses aus Richtung des Pfeiles C in Fig. 1 bzw. 3.

### Beschreibung der Erfindung:

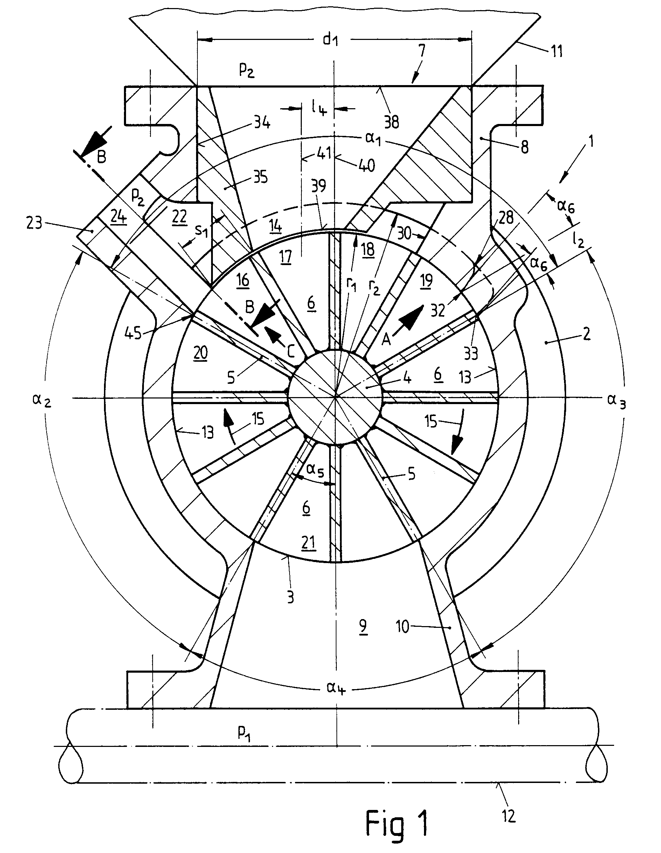

Die in der Fig. 1 dargestellte Zellenradschleuse 1 ist als Austragsschleuse ausgebildet und besteht aus einem Gehäuse 2 mit einem sich darin befindenden Zellenrad oder Rotor 3 mit einer horizontalen Zellenradwelle 4. Auf der Zellenradwelle sind radiale Stege 5 angeordnet, die die Kammern 6 für das zu fördernde Schüttgut bilden. Im oberen Bereich der Zellenradschleuse 1 befindet sich ein Schüttgutzulauf 7 der durch einen zylindrischen Anschlußflansch 8 am Rotorgehäuse 2 gebildet ist. Im unteren Bereich ist ein Schüttgutauslauf 9 vorgesehen, der durch einen sich konisch erweiternden Flansch 10 unterhalb des Zellenrades 3 gebildet wird. Der Schüttgutzulauf kann mit einem darüber angedeuteten Silo 11 für Schüttgut unter Atmosphärendruck verbunden sein. Der untere Schüttgutauslauf 9 ist beispielsweise mit einer Förderleitung 12 verbunden, durch welche mit erhöhtem Druck das Schüttgut aus der Zellenradschleuse weitertransportiert wird.

Aufgrund der Druckdifferenz zwischen dem Druck p₁ in der unteren Föderleitung 12 und dem atmosphärischen Druck p₂ im oberen Silo 11 kommt es zu einem Druckgefälle, welches beispielsweise 1 bar oder mehr betragen kann. Dieses Druckgefälle wird erreicht durch ein sehr enges Spiel zwischen den radialen Stegen 5 des Zellenrad 3 und der Zellenradbohrung 13 des Gehäuses 2. Aufgrund von Restspalten, die ca. 1/10 mm betragen können, kommt es dennoch allseitig des Zellenrades zu einer unerwünschten Leckluftströmung im oberen Bereich des Gehäuses. Diese Leckluftströmung wird noch durch das Luftvolumen der in den Schüttguteinlauf expandierenden Zellenradkammern erhöht. Auch diese nach oben transportierte Kammerluft führt ohne weitere Vorkehrungen zu einem Druckstoß entgegen dem Schüttgutzulaufstrom im oberen Schüttgutzulauf.

Erfindungsgemäß ist nun im oberen Bereich des Rotorgehäuses 2 ein segmentartiger Freiraum 14 über die Breite l₅ vorgesehen, der sich bogenförmig über einen großen Winkelbereich oberhalb der radialen Stege 5 erstreckt. Dieser Freiraum 14 wird durch eine Segmentausnehmung innerhalb des Zellenradgehäuses erzielt. Dabei ist der innere Segmentradius mit r₁, der äußere Segmentradius mit r₂ angegeben. Der Segmentwinkel beträgt etwas α ₁ ∼ 120°.

Wie aus Fig. 1 ersichtlich, befinden sich jeweils max. vier und min. drei radiale Stege 5 innerhalb des abgedichteten zylindrischen Innenraums 13 des Zellenradgehäuses 2, wobei die Drehrichtung des Rotors mit Pfeil 15 angegeben ist. Bei einer weitgehend symmetrischen Ausbildung des Zellenradgehäuses sind deshalb max. vier radiale Stege 5 über einen Winkelbereich α ₂ ∼ 90° innerhalb des Zellenradgehäuses in der linken Figurenhälfte angeordnet. Gleichermaßen befinden sich max. vier Zellenradstege 5 über einen Winkelbereich α ₃ ∼ 90° auf der rechten Seite der Figurendarstellung innerhalb des Zellenradgehäuses. Der untere Schüttgutauslauf 9 erstreckt sich über einen Winkelbereich α ₄ ∼ 60° und überstreicht damit min. zwei Kammerbereiche. Die zwölf radialen Stege 5 schließen daher einen Winkel von jeweils α ₅ ∼ 30° ein.

In der in Fig. 1 dargestellten Stellung des Zellenrades 3 befinden sich daher die vier Kammern 16 bis 19 der Zellenradkammern 6 in der oberen Stellung und werden von dem Freiraum 14 segmentartig überdeckt. Die Kammer 20 befindet sich noch innerhalb des zylindrischen Innenraums 13 und damit unter Druck, den sie aufgrund der Druckbeaufschlagung in der unteren Kammerstellung 21 aufgrund des höheren Druckes p₁ erhalten hat. Sobald die Kammer 20 in die Leckluftabführung 24 eintaucht, kann sich die darin komprimierte Luft schlagartig entspannen, und strömt dann gemeinsam mit allseitig zwischen den Zellenradstegen 5 und der Zellenradbohrung 13 aufsteigenden Luft als Leckluft durch den Leckluftstutzen 23 in einen getrennten Raum mit Atmosphärendruck. Um eine schlagartige Expansion der in den aufsteigenden Zellenradkammern befindlichen verdichteten Luft zu vermeiden, ist die Kante 45 am Beginn des Innenraums 22 entgegen der Drehrichtung 15 gerade oder leicht pfeilförmig zur Längsachse des Zellenrades ausgebildet, und zwar mit ihrer Spitze im Zentrum der Leckluftabführung 24. Dadurch öffnet sich wie bei einer Schere langsam der freie Querschnitt zwischen Leckluftstutzen 24 und Kante 45 sowie Zellenradsteg 5 während der Drehung des Zellenrades. Ohne einen störenden "Puffeffekt" kann insbesondere bei steigenden Druckdifferenzen auf diese Weise die verdichtete Luft aus der aufsteigenden Zellenradkammer 6 über den Innenraum 22 durch den Leckluftstutzen 24 abgeführt werden.

Der Produktzulauf im oberem Schüttguteinlauf 7 wird daher von diesem Druckabbau nicht mehr negativ beeinflußt, denn das von dem Silo 11 in die Zellenradschleuse einfließende Schüttgut wird nicht durch aufsteigende Leckluft behindert.

Die Ausbildung des Luftabführstutzens 23 ist im Längsschnitt B-B nach Fig. 1 in Fig. 3 und 4 nochmals dargestellt. Dabei ist der oberhalb des schalenförmigen Freiraumes 14 angeordnete Innenraum 22 zum Leckluftstutzen 24 nochmals dargestellt. Der Luftabführstutzen 23 ist im Schleusengehäuse 2 integriert.

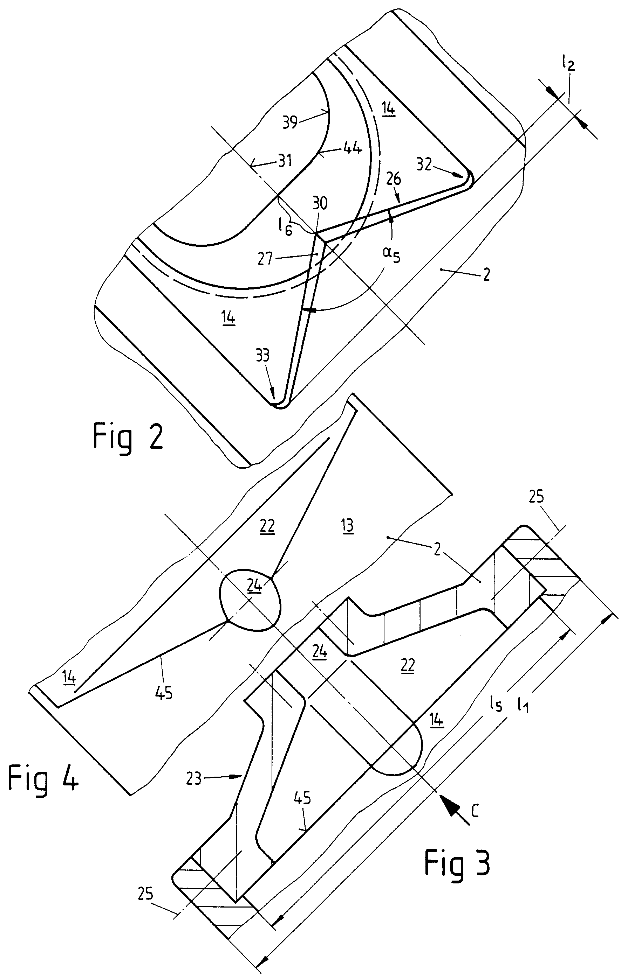

Fig. 2 zeigt die Ansicht des Freiraumes 14 aus Sicht des Pfeiles A in Fig. 1. Dabei ist ersichtlich, daß wenigstens eine Abstreifkante 26 vorgesehen ist, die einen V-förmigen Verlauf einnimmt, wobei der eingeschlossene Winkeln α ₅ ∼ 100° beträgt. Wie aus Fig. 1 und 2 ersichtlich, ist die V-förmige Stirnkante 27 ähnlich wie ein Pflug ausgebildet. Die vordere Spitze 30 der V-förmigen Abstreifkante 26 kann z. B. auf der Symmetriemittelachse 31 des Zellenradgehäuses 2 liegen. Die Endpunkte 32, 33 der V-förmigen Abstreifkante 26 sind dabei um den Betrag l₂ versetzt angeordnet. Hierdurch kann in den Eckpunkten 32, 33 niemals gleichzeitig zwischen Zellenradsteg und Gehäuseeintrittskante Produkt eingeklemmt werden..

Die schräge Stirnkante 27 weist in der Verlängerung zum Mittelpunkt des Zellenradgehäuses 2 hin.

Die Abstreifkante 26 dient zur Abstreifung und Verteilung des über die Kammern 6 herausragenden Schüttgutes vor dem Eintritt der Kammern in die Gehäusebohrung 13 und bildet mit den Stegen des Zellenrades einen Winkel > 40°, so daß beim Austragen von Granulat keine Körner zwischen Zellenradsteg und Abstreifkante eingeklemmt und dann abgeschert werden. Dadurch wird das unerwünschte Hacken der Zellenradschleuse vermieden und ein ruhiger Lauf des Zellenrades erreicht. Diese Problematik ist auch in der EP 0 212 256 B1 mit entsprechenden Unterschnittkanten und Schrägkanten beschrieben. Anstelle einer Spitze 30 mit V-förmigen Abstreifkanten 26 sind auch mehrere, zur Zellenradwellenachse versetzt angeordnete Spitzen 30 und Endpunkte 32, 33 im Ein- und Auslauf der Schleuse möglich.

Der obere zylindrische Anschlußflansch 8 weist eine zylindrische Innenwandung 34 mit dem Durchmesser d₁ auf. Wird mit der erfindungsgemäßen Zellenradschleuse beispielsweise ein schlechtfließendes Pulver oder dergleichen gefördert, so wird der in der Fig. 1 dargestellte Einsatz 35 so ausgebildet, daß ein maximaler Querschnitt für den Schüttgutzustrom zum Zellenrad 3 zur Verfügung steht. Dabei mündet der Schüttgutstrom im Schüttgutzulauf 7 unmittelbar auf den Kammern 6 des Zellenrades 3, wobei der freie Spalt in der Regel ca. 1 bis 3 mm beträgt und der Freiraum 14 einschließlich des Innenraums 22 den freien Querschnitt des Schüttgutzulaufes umgibt, für die Leckluftabfuhr durch den Anschlußstutzen 24. Die Leckluft kann somit rings um den Produktstrom herum über den Freiraum 14, 22 entweichen, so daß der Produktstrom nicht durch die aufsteigende Leckluft beeinträchtigt wird. Der Freiraum 14 muß deshalb so groß gewählt werden, daß er stets einen den zufließenden Produktstrom umgebenden ausreichenden Raum für die vom Produktzulauf getrennte Leckluftabführung bildet.

Soll mit der vorliegenden Zellenradschleuse auch sehr leicht fließendes Granulat gefördert werden, so kann in den zylindrischen Anschlußflansch 8 der Einsatz 35 mit einer Querschnittsreduzierung eingesetzt werden.

In Fig. 1 ist der Einsatz 35 asymmetrisch ausgebildet, d. h. die Mittellinie 41 der ovalen Austrittfläche 39 ist um den Betrag l₄ gegenüber der Symmetriemittellinie 40 des Anschlußflansches 8 versetzt angeordnet. Der obere Zulaufquerschnitt 38 ist kreisförmig. Durch diese exzentrische Anordnung des Zulaufquerschnitts 39 werden die in Fig. 1 dargestellten linken Kammern 16, 17 sehr früh mit Schüttgut beaufschlagt, so daß die Befüllung dieser Kammern noch in der Aufwärtsdrehrichtung erfolgt. Dies hat den Vorteil, daß sich das Schüttgut in den Bereichen der Kammern 18, 19 bereits absetzen und verteilen kann. Die Exzentrizität l₄ wird derart gewählt, daß noch ein Teilbereich 42 des unteren Auslaufquerschnitts 39 über die Mittellinie 40 hinausragt und in den darunterliegenden Kammerbereich mündet.

In Fig. 2 ist die Anordnung nach Fig. 1, von unten (Ansicht A) dargestellt. Dabei liegt die rechte Einströmkante 44 um einen Betrag l₆ vor dem Auftreffen auf die Spitze 30 der Abstreifkante 26. Das Schüttgut kann sich demnach in diesem Bereich im Freiraum 14 in die Kammern verteilen und durch die Kante 26 abgestreift werden.

Gemäß der vorliegenden Erfindung bewirkt deshalb der unmittelbar über den Zellenradstegen 5 ringförmig angeordnete Freiraum 14, daß der abwärtsgerichtete Schüttgutstrom völlig ungehindert vom Leckluftstrom fließen kann. Insbesondere wird durch den ringförmigen Freiraum 14 ein vom abwärtsgerichteten Schüttgutstrom getrennter Raum gebildet, um die aus den aufsteigenden Zellenradkammern und die allseitig um das Zellenrad hochströmende Leckluft ungehindert abführen zu können.

Die Erfindung ist nicht auf das dargestellte und beschriebene Ausführungsbeispiel beschränkt. Sie umfaßt auch vielmehr alle fachmännischen Weiterbildungen ohne eigenen erfinderischen Gehalt.

## Patentansprüche

1. Zellenradschleuse zum Dosieren von Schüttgut, bestehend aus einem, um eine horizontale Zellenradwelle in einem Gehäuse sich drehenden Zellenrad mit radialen Stegen zur Bildung von V-förmigen Zellenradkammern, mit einem oberen Schüttgutzulauf und einem unteren Schüttgutauslauf, wobei zwischen Schüttgutzulauf und Schüttgutauslauf eine Druckdifferenz vorhanden ist, dadurch gekennzeichnet, daß im oberen Bereich des Zellenradgehäuses (2) oberhalb der Zellenradstege (5) ein Freiraum (14) für Leckluft vorgesehen ist, der sich vollständig um den Querschnitt des Schüttgutzulaufs (38, 39) erstreckt, zur Bildung eines Ringraumes 14 zur ungehinderten Leckluftabführung, wobei der Ringraum 14 getrennt vom Produktzulauf in die Zellenradkammern 6 ist.

2. Zellenradschleuse nach Anspruch 1, dadurch gekennzeichnet, daß der Freiraum (14) als in das Zellenradgehäuse (2) oberhalb der Zellenradstege (5) eingebrachter Segmentabschnitt ausgebildet ist.

3. Zellenradschleuse nach Anspruch 1 oder 2, dadurch gekennzeichnet, daß im Zellenradgehäuse (2) auf beiden Seiten der Zellenradschleuse mindestens drei Zellenradstege (5) abgedichtet im Zellenradgehäuse (2) mit kleinem Spalt geführt sind, daß der sich hieran in Drehrichtung anschließende obere Freiraum (14) vor dem Schüttgutzulauf (7) beginnt und nach dem Schüttgutzulauf (7) endet, wobei eine Leckluftabführung (23) vor dem Schüttgutzulauf (7) angeordnet ist.

4. Zellenradschleuse nach einem oder mehreren der vorhergehenden Ansprüche, dadurch gekennzeichnet, daß sich der Freiraum (14) als Hohlraum mit einer Länge l₅ erstreckt, die etwa der gesamten Baulänge des Zellenrades (3) entspricht.

5. Zellenradschleuse nach einem oder mehreren der vorhergehenden Ansprüche, dadurch gekennzeichnet, daß der Freiraum (14) in seinem bezüglich der Zellenraddrehung (15) vorgesehenen Endbereich eine oder mehrere V-förmige Abstreifkanten (26) für Schüttgut aufweist, die die Eintrittskante der Zellenradstege (5) in den zylindrischen Wandbereich (13) des Zellenradgehäuses (2) bilden und zwar unter einem Winkel α ₅ < 100°.

6. Zellenradschleuse nach Anspruch 5, dadurch gekennzeichnet, daß eine oder mehrere V-förmige Abstreifkanten (26) mit Spitzen (30) vorgesehen sind, die in ihrer vorderen Stirnkante (27) schneepflugartig mit einer Anlaufschräge (27) ausgebildet und - in Drehrichtung des Zellenrades gesehen - am Ende des Einlaufes (7) und des Auslaufes (9) angeordnet sind.

7. Zellenradschleuse nach Anspruch 6, dadurch gekennzeichnet, daß die axial auseinanderliegenden Endpunkte (32, 33) der V-förmigen Abstreifkante (26), in Drehrichtung jeweils um einen Betrag l₂ versetzt zueinander angeordnet sind.

8. Zellenradschleuse nach einem oder mehreren der vorhergehenden Ansprüche, dadurch gekennzeichnet, daß der Schüttgutzulauf (7) als zylindrischer Anschlußflansch (8) ausgebildet ist, der in den Freiraum (14) mündet.

9. Zellenradschleuse nach Anspruch 8, dadurch gekennzeichnet, daß im zylindrischen Anschlußflansch (8) ein variabler Einsatz (35) vorgesehen ist, der in seinem oberen Bereich einen zylindrischen Einlaufquerschnitt (38), in seinem unteren Bereich eine ovalförmigen Auslaufquerschnitt (39) aufweist, wobei die Verbindung der Querschnitte (38, 39) über einen konischen Einlauftrichter bis unmittelbar oberhalb der Zellenradstege (5) erfolgt und die Stegbreite s₁ bis maximal zur Breite einer Zellenradkammer (6) ausgebildet ist.

10. Zellenradschleuse nach Anspruch 9, dadurch gekennzeichnet, daß der untere Auslaufquerschnitt (39) als zentrische oder exzentrische ovale Austrittsöffnung ausgebildet ist.

11. Zellenradschleuse nach einem oder mehreren der vorhergehenden Ansprüche, dadurch gekennzeichnet, daß - in Drehrichtung (15) des Zellenrades (3) gesehen - der Beginn des Freiraumes (14) schräg zu den Zellenradstegen (5) und insbesondere V-förmig von der halben Breite des Zellenradgehäuses (2) nach außen in Richtung Produktzulauföffnung (7) verläuft, und insbesondere nach dem Eintritt der maximal halben Leckluftabführbohrung (24) in die Zellenradbohrung (13).
